# EUROPEAN PATENT APPLICATION

(11) **EP 4 760 665 A1**
(43) Date of publication of application: **17.06.2026**
(21) Application number: 25217385.1
(22) Date of filing: 20.11.2025
(51) Int. Cl.: G07C 9/00, G07C 9/20, G07C 9/27

(54) **SYSTEMS AND METHODS FOR REDUCING SECURITY VULNERABILITIES IN AN ACCESS CONTROL SYSTEM**

(30) Priority: 10.12.2024 US 202418975804
(71) Applicant: Honeywell International Inc., Charlotte, NC 28202 (US)
(72) Inventor: MENON, Chithira P S, Charlotte, 28202 (US); SIVARAM, Vikramraj, Charlotte, 28202 (US); JEEVAN, Senthil Kumar Somi, Charlotte, 28202 (US); SELVAM, Senthamizh, Charlotte, 28202 (US)
(74) Representative: Haseltine Lake Kempner LLP

(57) **Abstract**

A method, system, and computer-readable medium for enhancing security system vulnerabilities by managing access rights based on usage patterns. The approach tracks an authorized user's access transactions within a facility using assigned access credentials with defined access rights and conditions. Access transactions are logged over time and analyzed to determine utilization levels of specific access rights and their associated conditions. When usage falls below a predetermined threshold, access rights or conditions are redefined or removed. Changes can be automatically implemented or suggested to a system operator for approval. The approach may target specific access rights related to doors, floors, or zones within the facility, and can be configured to periodically review and adjust access rights. Additionally, entire access credentials may be revoked if overall usage falls below a separate threshold.

## Description

### TECHNICAL FIELD

The present disclosure relates generally to security systems, and more particularly to reducing security vulnerabilities in security systems.

### BACKGROUND

Current security systems, such as access control systems, typically grant certain access rights to each individual cardholder of a facility. For example, an individual cardholder may be initially granted access to certain zones, doors and/or other assets of a facility based on the job responsibilities of the individual cardholder, and these access rights may be active only during certain access time periods (e.g. during normal business hours). However, it has been found that each of the individual cardholders often do not use all of the access rights that are granted to the cardholder. These unused access rights can present certain security vulnerabilities in the security system. What would be desirable is a system and method that identifies unused and/or under-utilized access rights of the individual cardholders over time, and removes the unused and/or under-utilized access rights to help reduce security vulnerabilities in the security system.

### SUMMARY

The present disclosure relates generally to security systems, and more particularly to reducing security vulnerabilities in security system. An example may be found in a method for reducing vulnerabilities of a security system of a facility by removing unused and/or under-utilized access rights of an authorized user of the facility. The illustrative method includes the authorized user of the facility having an assigned access credential that when presented to the security system during an access transaction allows access to the facility in accordance with a plurality of access rights assigned to the access credential, wherein each of the plurality of access rights define one or more conditions under which the security system of the facility will grant the authorized user access to the facility. Access transactions of the authorized user are logged over time, wherein each of the logged access transactions record one or more the plurality of access rights and/or one or more of the defined conditions of one or more of the plurality of access rights that were used by the security system to grant access to the facility. Based at least in part on the logged access transactions of the authorized user, the method includes determining one or more of the plurality of access rights and/or one or more of the defined conditions of one or more of the plurality of access rights that are assigned to the access credential of the authorized user that were used at a utilization level that is below a utilization threshold. The plurality of access rights and/or one or more of the defined conditions of one or more of the plurality of access rights assigned to the access credential of the authorized user are redefined to not include one or more of the plurality of access rights and/or one or more of the defined conditions of one or more of the plurality of access rights that have a utilization level that is below the utilization threshold.

Another example may be found in a system for reducing vulnerabilities of a security system of a facility by removing under-utilized access rights of an authorized user of the facility. The system includes a memory for storing an assigned access credential and a plurality of access rights assigned to the access credential for the authorized user that when presented to the security system during an access transaction allows the authorized user access to the facility in accordance with the plurality of access rights assigned to the access credential, wherein each of the plurality of access rights define one or more conditions under which the security system of the facility will grant the authorized user access to the facility. A controller is operatively coupled to the memory and the security system. The controller is configured to receive access transactions of the authorized user over time from the security system. The controller is configured to log the access transactions of the authorized user over time, wherein each of the logged access transactions includes one or more of the plurality of access rights and/or one or more of the defined conditions of one or more of the plurality of access rights that were used by the security system to grant access to the facility. Based at least in part on the logged access transactions of the authorized user, the controller is configured to determine one or more of the plurality of access rights and/or one or more of the defined conditions of one or more of the plurality of access rights that are assigned to the access credential of the authorized user that were used at a utilization level that is below a utilization threshold. The controller is configured to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold. The controller is configured to write the redefined access rights to the memory.

Another example may be found in a non-transitory computer readable storage medium that stores instructions. When the instructions are executed by one or more processors, the one or more processors are caused to store an assigned access credential and a plurality of access rights assigned to the access credential of an authorized user of a security system of a facility that when presented to the security system during an access transaction allows the authorized user access to the facility in accordance with the plurality of access rights assigned to the access credential, wherein each of the plurality of access rights define one or more conditions under which the security system of the facility will grant the authorized user access to the facility. The one or more processors are caused to receive access transactions of the authorized user over time from the security system. The one or more processors are caused to log the access transactions of the authorized user over time, wherein each of the logged access transactions includes one or more of the plurality of access rights and/or one or more of the defined conditions of one or more of the plurality of access rights that were used by the security system to grant access to the facility. Based at least in part on the logged access transactions of the authorized user, the one or more processors are caused to determine one or more of the plurality of access rights and/or one or more of the defined conditions of one or more of the plurality of access rights that are assigned to the access credential of the authorized user that were used at a utilization level that is below a utilization threshold. The one or more processors are caused to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative access control system;
Figures 2A and 2B are flow diagrams that together show an illustrative method for reducing vulnerabilities of a security system;
Figure 3 is a flow diagram that shows an illustrative method for reducing vulnerabilities of a security system;
Figures 4A and 4B are flow diagrams that together show an illustrative series of steps that may be carried out by one or more processors executing instructions stored on a non-transitory computer readable medium;
Figures 5A and 5B are flow diagrams that together show an illustrative series of steps that may be carried out by one or more processors executing instructions stored on a non-transitory computer readable medium;
Figure 6 is a flow diagram showing an illustrative method;
Figure 7 is a flow diagram showing an illustrative method; and
Figure 8 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

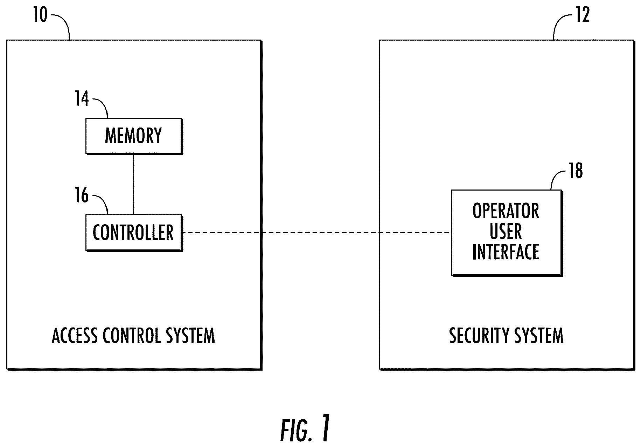

Figure 1 is a schematic block diagram showing an illustrative access control system 10 that may be part of or be used in conjunction with a security system 12. In some cases, the access control system 10 may include card readers and other equipment. The card readers may be presented with access cards by users, and may allow access to a corresponding zone, door and/or other asset of a facility. The term "access card" may refer to a physical access card, access credentials stored on a mobile device that can be wirelessly read by the card reader, and/or may be biometric data of the user (e.g. fingerprint, face recognition, retina scan, etc.) that can be read by the card reader. These are just examples.

The illustrative access control system 10 is configured to reduce security vulnerabilities of the security system 12 by removing under-utilized rights of authorized users. Removing unused or underused access rights from an authorized user can help reduce vulnerabilities. For example, if the authorized user ever lost their access card or it was stolen, the lost or stolen access card would have fewer access rights than if the unused and underused access rights were not removed. This reduces security vulnerabilities of the security system. Moreover, because the removed access rights are rarely or even never used, removing certain access rights does not materially impact access to the user.

The illustrative access control system 10 includes a memory 14 and a controller 16 that is operatively coupled to the memory 14 as well as the security system 12. The memory 14 is configured to store an assigned access credential and a plurality of access rights assigned to the access credential for the authorized user that when presented to the security system 12 during an access transaction allows the authorized user access to the facility in accordance with the plurality of access rights assigned to the access credential. Each of the plurality of access rights define one or more conditions under which the security system 12 of the facility will grant the authorized user access to the facility.

The controller 16 of the access control system 10 is configured to receive access transactions of the authorized user over time and to log the access transactions of the authorized user over time. In some cases, each of the logged access transactions may include one or more of the plurality of access rights and/or one or more of the defined conditions of one or more of the plurality of access rights that were used by the security system 12 to grant access to the facility. Based at least in part on the logged access transactions of the authorized user, the controller 16 is configured to determine one or more of the plurality of access rights and/or one or more of the defined conditions of one or more of the plurality of access rights that are assigned to the access credential of the authorized user that were used at a utilization level that is below a utilization threshold. The controller 16 is configured to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold. The controller 16 is configured to write the redefined access rights to the memory, and future access requests by the authorized user will be controlled in accordance with the redefined access rights,

In some cases, the controller 16, in redefining the plurality of access rights and/or one or more of the defined conditions of one or more of the plurality of access rights assigned to the access credential of the authorized user, may be configured to remove the one or more of the plurality of access rights and/or one or more of the defined conditions of one or more of the plurality of access rights that have a utilization level that is below the utilization threshold. In some cases, the controller 16, in redefining the plurality of access rights and/or one or more of the defined conditions of one or more of the plurality of access rights assigned to the access credential of the authorized user, may be configured to replace one or more of the one or more of the plurality of access rights and/or one or more of the defined conditions of one or more of the plurality of access rights that have a utilization level that is below the utilization threshold with a new access right that includes the one or more of the plurality of access rights and/or one or more of the defined conditions of one or more of the plurality of access rights that have a utilization level that is above the utilization threshold but does not include the one or more of the plurality of access rights and/or one or more of the defined conditions of one or more of the plurality of access rights that have a utilization level that is below the utilization threshold.

In some cases, the controller 16 may be configured to provide a suggestion to an operator of the security system 12 via an operator user interface 18 to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold. The controller 16 may be configured to receive an authorization from the operator via the operator user interface 18. In response to receiving the authorization from the operator via the operator user interface 18, the controller 16 may be configured to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

In some cases, the controller 16 may be configured to automatically repeat several steps from time to time. The repeated steps may include, based at least in part on the logged access transactions of the authorized user over a period of time (e.g. last week, month, quarter or year), determining one or more of the plurality of access rights and/or one or more of the defined conditions of one or more of the plurality of access rights that are assigned to the access credential of the authorized user that were used at a utilization level that is below a utilization threshold. The repeated steps may include redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

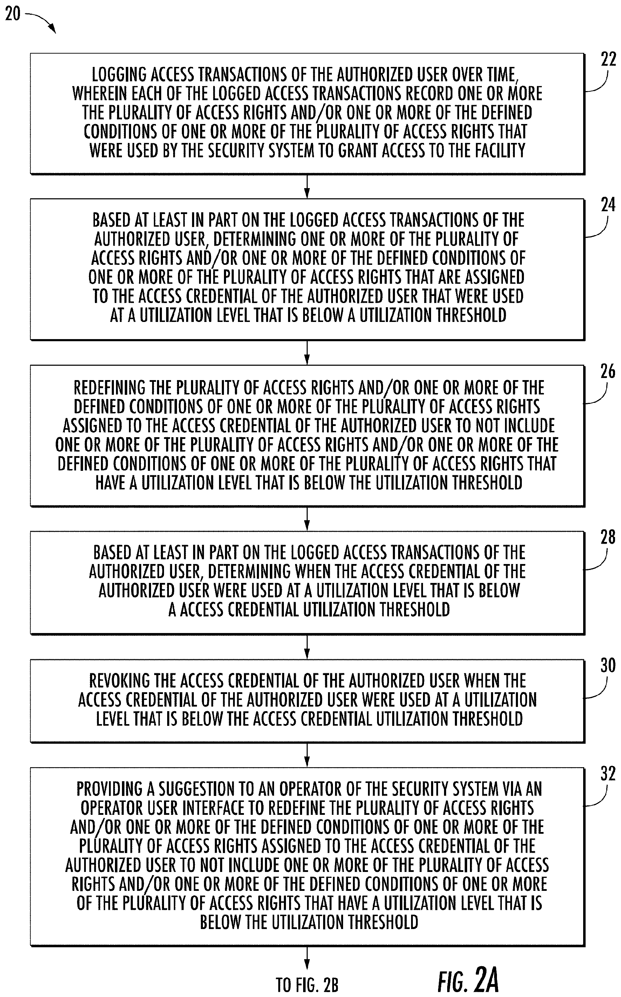

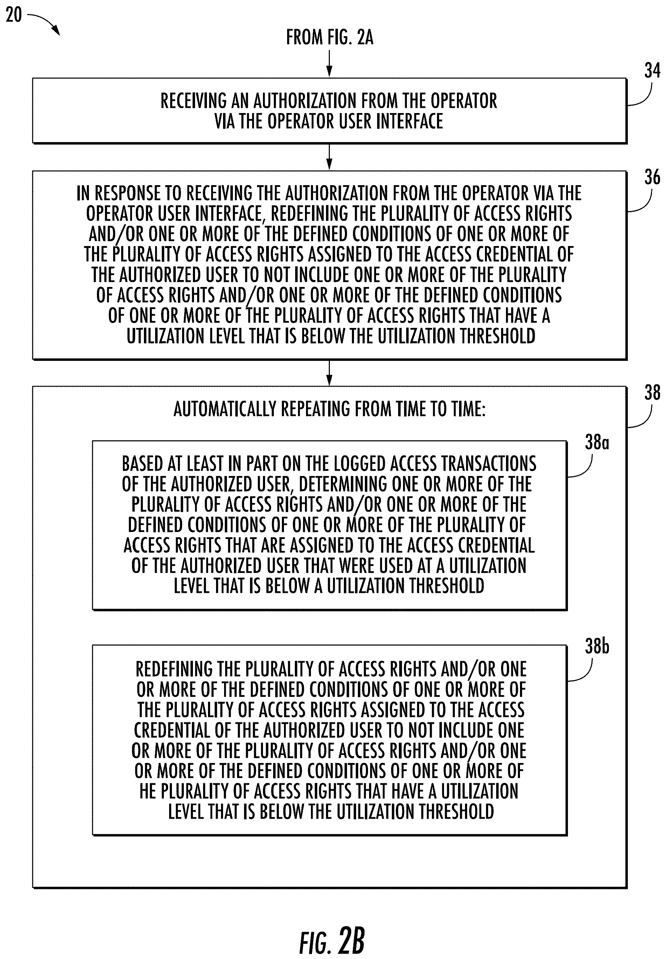

Figures 2A and 2B are flow diagrams that together show an illustrative method 20 for reducing vulnerabilities of a security system (such as the security system 12) of a facility by removing under-utilized access rights of an authorized user of the facility. In the method 20, the authorized user of the facility has an assigned access credential that when presented to the security system during an access transaction allows access to the facility in accordance with a plurality of access rights assigned to the access credential. Each of the plurality of access rights may define one or more conditions under which the security system of the facility will grant the authorized user access to the facility. In some cases, a first one of the one or more of the plurality of access rights may include an access right to access a particular door of the facility. One or more of the defined conditions of the first one of the one or more of the plurality of access rights may include a condition to only allow access to the particular door of the facility during a defined time period or defined time schedule, for example. In some cases, a first one of the one or more of the plurality of access rights may include an access right to access a particular floor of the facility. In some cases, one or more of the defined conditions of the first one of the one or more of the plurality of access rights may include a condition to only allow access to the particular floor of the facility during a defined time period or defined time schedule. In some cases, a first one of the one or more of the plurality of access rights may include an access right to access a particular zone of the facility. These are just examples.

The illustrative method 20 includes logging access transactions of the authorized user over time, wherein each of the logged access transactions record one or more the plurality of access rights and/or one or more of the defined conditions of one or more of the plurality of access rights that were used by the security system to grant access to the facility, as indicated at block 22. Based at least in part on the logged access transactions of the authorized user, a determination is made as to one or more of the plurality of access rights and/or one or more of the defined conditions of one or more of the plurality of access rights that are assigned to the access credential of the authorized user that were used at a utilization level that is below a utilization threshold, as indicated at block 24. The method 20 includes redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 26.

In some cases, the method 20 may include, based at least in part on the logged access transactions of the authorized user, determining when the access credentials of the authorized user were used at a utilization level that is below an access credential utilization threshold, as indicated at block 28. The access credential of the authorized user may be revoked when the access credentials of the authorized user were used at a utilization level that is below the access credential utilization threshold, as indicated at block 30. In some cases, the method 20 may include providing a suggestion to an operator of the security system via an operator user interface to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 32.

Continuing on Figure 2B, the method 20 may include receiving an authorization from the operator via the operator user interface, as indicated at block 34. In response to receiving the authorization from the operator via the operator user interface, the method 20 may include redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 36.

In some cases, the method 20 may include automatically repeating several steps from time to time, as indicated at block 38. As an example, these steps may be repeated at a rate of once per month or less, once per week, once per month, once per quarter, or any other suitable rate. The steps may include, based at least in part on the logged access transactions of the authorized user, determining one or more of the plurality of access rights and/or one or more of the defined conditions of one or more of the plurality of access rights that are assigned to the access credential of the authorized user that were used at a utilization level that is below a utilization threshold, as indicated at block 38a. The threshold utilization threshold may be zero times, less than once per week, less than one per month, less then once per quarter, less than once per year, or any other suitable threshold. The steps may include redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 38b.

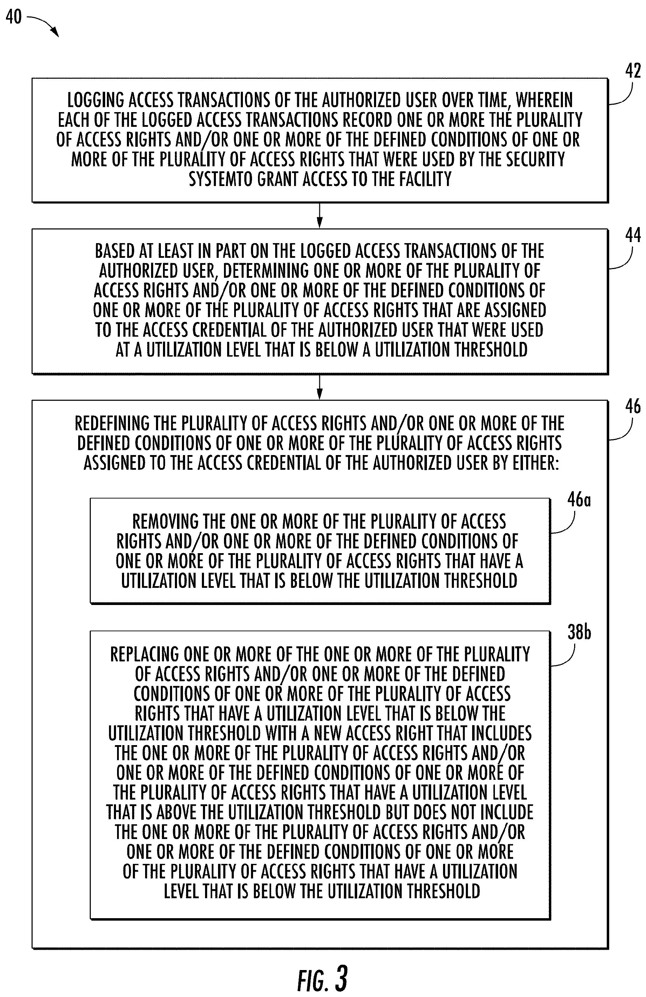

Figure 3 is a flow diagram that shows an illustrative method 40 for reducing vulnerabilities of a security system (such as the security system 12) of a facility by removing under-utilized access rights of an authorized user of the facility. In the method 40, the authorized user of the facility has an assigned access credential that when presented to the security system during an access transaction allows access to the facility in accordance with a plurality of access rights assigned to the access credential. Each of the plurality of access rights define one or more conditions under which the security system of the facility will grant the authorized user access to the facility. In some cases, a first one of the one or more of the plurality of access rights may include an access right to access a particular door of the facility. One or more of the defined conditions of the first one of the one or more of the plurality of access rights may include a condition to only allow access to the particular door of the facility during a defined time period or defined time schedule, for example. In some cases, a first one of the one or more of the plurality of access rights may include an access right to access a particular floor of the facility. In some cases, one or more of the defined conditions of the first one of the one or more of the plurality of access rights may include a condition to only allow access to the particular floor of the facility during a defined time period or defined time schedule. In some cases, a first one of the one or more of the plurality of access rights may include an access right to access a particular zone of the facility. These are just examples.

The method 40 includes logging access transactions of the authorized user over time, wherein each of the logged access transactions record one or more the plurality of access rights and/or one or more of the defined conditions of one or more of the plurality of access rights that were used by the security system to grant access to the facility, as indicated at block 42. Based at least in part on the logged access transactions of the authorized user, a determination is made as to one or more of the plurality of access rights and/or one or more of the defined conditions of one or more of the plurality of access rights that are assigned to the access credential of the authorized user that were used at a utilization level that is below a utilization threshold, as indicated at block 44. The method 40 includes redefining the plurality of access rights and/or one or more of the defined conditions of one or more of the plurality of access rights assigned to the access credential of the authorized user, as indicated at block 46. In some cases, this may be achieved by removing the one or more of the plurality of access rights and/or one or more of the defined conditions of one or more of the plurality of access rights that have a utilization level that is below the utilization threshold, as indicated at block 46a. In some cases, this may be achieved by replacing one or more of the one or more of the plurality of access rights and/or one or more of the defined conditions of one or more of the plurality of access rights that have a utilization level that is below the utilization threshold with a new access right that includes the one or more of the plurality of access rights and/or one or more of the defined conditions of one or more of the plurality of access rights that have a utilization level that is above the utilization threshold but does not include the one or more of the plurality of access rights and/or one or more of the defined conditions of one or more of the plurality of access rights that have a utilization level that is below the utilization threshold, as indicated at block 46b.

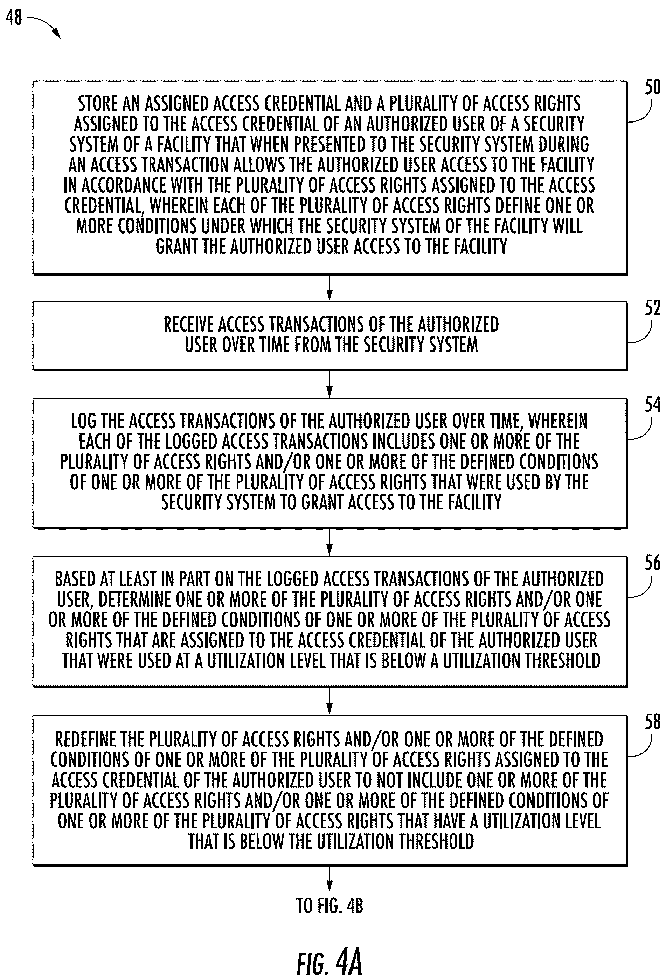

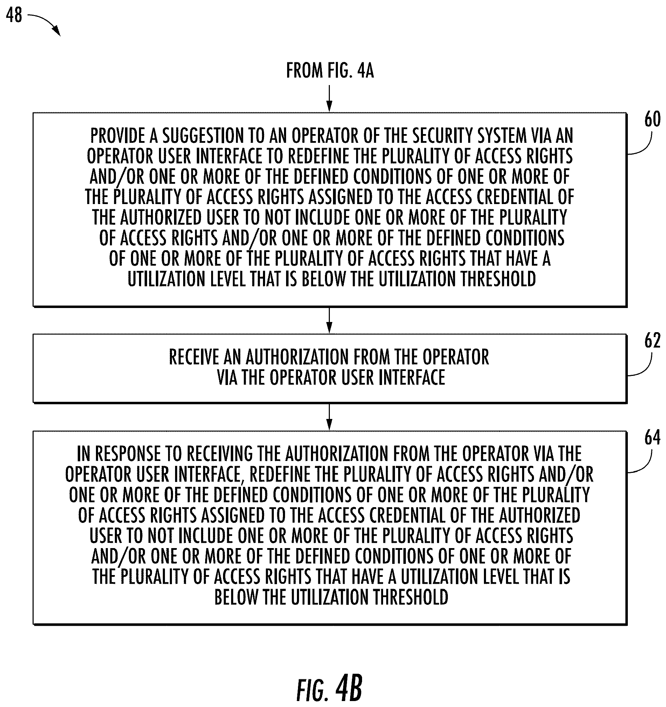

Figures 4A and 4B are flow diagrams that together show an illustrative series of steps 48 that may be carried out by one or more processors when the one or more processors execute instructions that are stored on a non-transitory computer readable medium. In some cases, the one or more processors may be part of the controller 16 (Figure 1). The one or more processors are caused to store an assigned access credential and a plurality of access rights assigned to the access credential of an authorized user of a security system of a facility that when presented to the security system during an access transaction allows the authorized user access to the facility in accordance with the plurality of access rights assigned to the access credential. In some cases, each of the plurality of access rights define one or more conditions under which the security system of the facility will grant the authorized user access to the facility, as indicated at block 50. The one or more processors are caused to receive access transactions of the authorized user over time from the security system, as indicated at block 52. The one or more processors are caused to log the access transactions of the authorized user over time, wherein each of the logged access transactions includes one or more of the plurality of access rights and/or one or more of the defined conditions of one or more of the plurality of access rights that were used by the security system to grant access to the facility, as indicated at block 54. Based at least in part on the logged access transactions of the authorized user, the one or more processors are caused to determine one or more of the plurality of access rights and/or one or more of the defined conditions of one or more of the plurality of access rights that are assigned to the access credential of the authorized user that were used at a utilization level that is below a utilization threshold, as indicated at block 56. The one or more processors are caused to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 58.

Continuing on Figure 4B, the instructions in redefining the plurality of access rights and/or one or more of the defined conditions of one or more of the plurality of access rights assigned to the access credential of the authorized user, may cause the one or more processors to provide a suggestion to an operator of the security system via an operator user interface to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 60. The one or more processors are caused to receive an authorization from the operator via the operator user interface, as indicated at block 62. In response to receiving the authorization from the operator via the operator user interface, the one or more processors are caused to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 64.

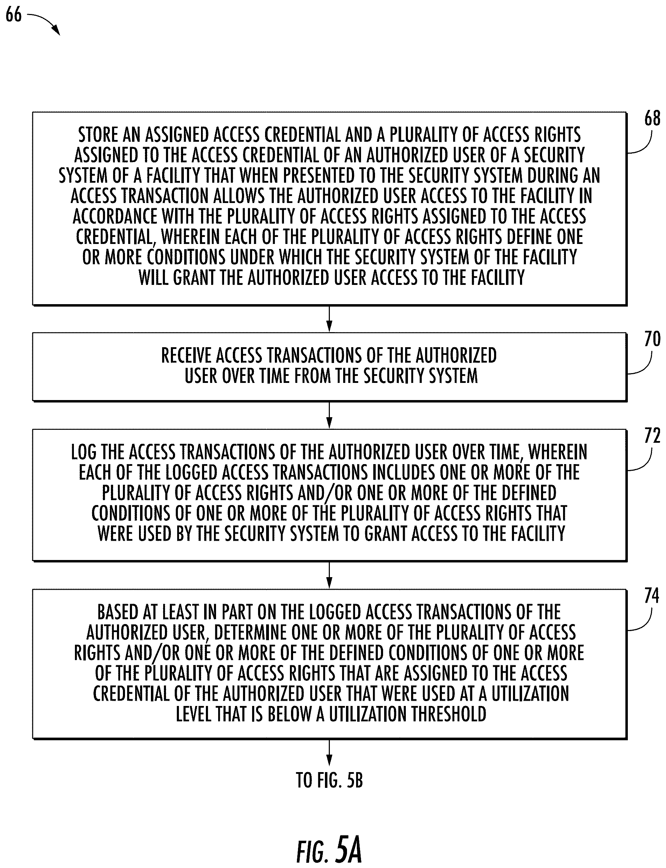

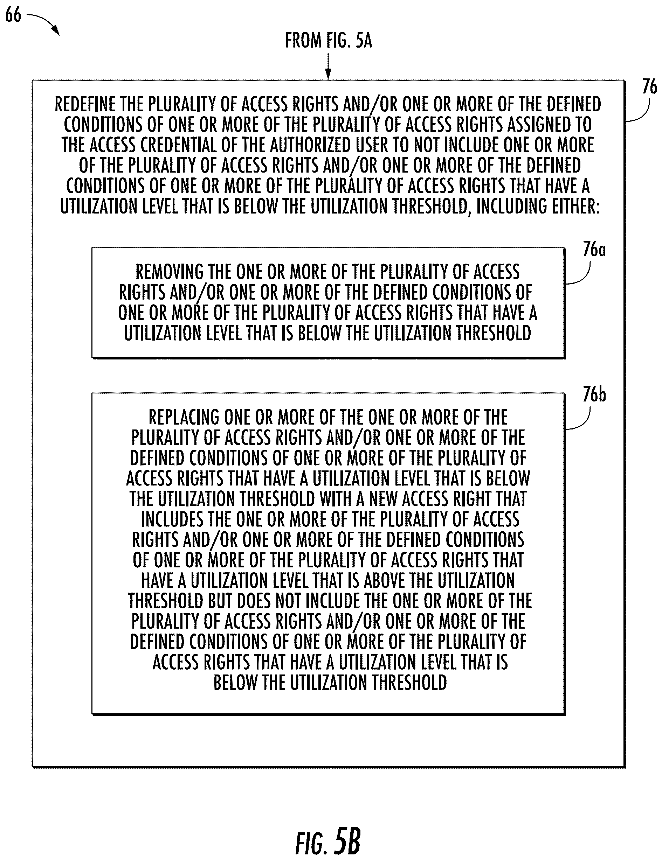

Figures 5A and 5B are flow diagrams that together show an illustrative series of steps 66 that may be carried out by one or more processors when the one or more processors execute instructions that are stored on a non-transitory computer readable medium. In some cases, the one or more processors may be part of the controller 16 (Figure 1). The one or more processors are caused to store an assigned access credential and a plurality of access rights assigned to the access credential of an authorized user of a security system of a facility that when presented to the security system during an access transaction allows the authorized user access to the facility in accordance with the plurality of access rights assigned to the access credential, wherein each of the plurality of access rights define one or more conditions under which the security system of the facility will grant the authorized user access to the facility, as indicated at block 68. The one or more processors are caused to receive access transactions of the authorized user over time from the security system, as indicated at block 70. The one or more processors are caused to log the access transactions of the authorized user over time, wherein each of the logged access transactions includes one or more of the plurality of access rights and/or one or more of the defined conditions of one or more of the plurality of access rights that were used by the security system to grant access to the facility, as indicated at block 72. Based at least in part on the logged access transactions of the authorized user, the one or more processors are caused to determine one or more of the plurality of access rights and/or one or more of the defined conditions of one or more of the plurality of access rights that are assigned to the access credential of the authorized user that were used at a utilization level that is below a utilization threshold, as indicated at block 74.

Continuing on Figure 5B, the one or more processors are caused to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold, as indicated at block 76. In some cases, this may be accomplished by removing the one or more of the plurality of access rights and/or one or more of the defined conditions of one or more of the plurality of access rights that have a utilization level that is below the utilization threshold, as indicated at block 76a. In some cases, this may be accomplished by replacing one or more of the one or more of the plurality of access rights and/or one or more of the defined conditions of one or more of the plurality of access rights that have a utilization level that is below the utilization threshold with a new access right that includes the one or more of the plurality of access rights and/or one or more of the defined conditions of one or more of the plurality of access rights that have a utilization level that is above the utilization threshold but does not include the one or more of the plurality of access rights and/or one or more of the defined conditions of one or more of the plurality of access rights that have a utilization level that is below the utilization threshold, as indicated at block 76b.

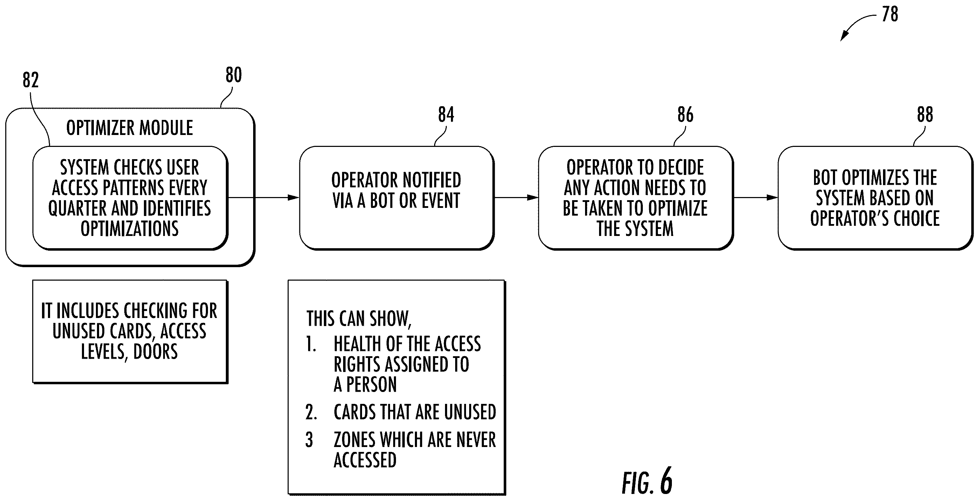

Figure 6 is a flow diagram showing an illustrative method 78. The method 78 includes use of an optimizer module 80. In some cases, the optimizer module 80 may be considered as being part of the access control system 10 (Figure 1). In some cases, the optimizer module 80 checks user access patterns every quarter (i.e. ever three months), as indicated at block 82. Based on the user access patterns, the optimizer module 80 may identify unused access rights during the quarter for each authorized user, including unused access cards, unused doors, unused floors, etc. The optimizer module 80 may then recommend redefining the plurality of access rights and/or one or more of the defined conditions of one or more of the plurality of access rights of one or more of the authorized users. The optimizer module 80 may then notified an operator of the security system of the recommendations, as indicated at block 84. In the example shown, the operator determines whether the user's access rights should be altered, as indicated at block 86. When the operator authorizes altering one or more of the access rights of one or more of the authorized users, a bot may automatically implement the authorized changes as indicated at module 88, rather than requiring the operator to make all of the recommended changes by navigating through a hierarchical menu structure of the security system, thereby saving time and reducing errors.

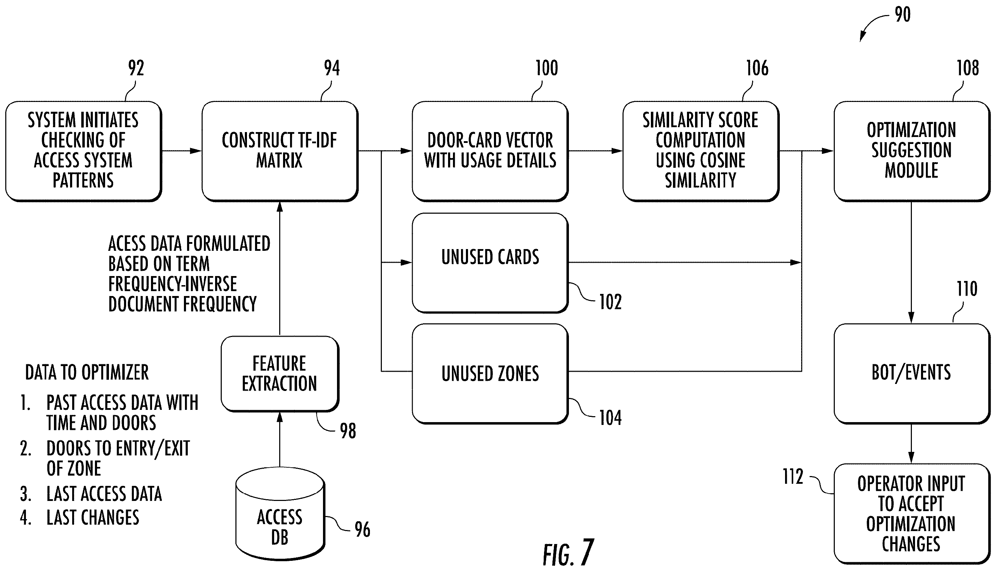

Figure 7 is a flow diagram showing an illustrative method 90. The method 90 may be carried out by the optimizer module 80 (Figure 6), for example. Access patterns are checked, as indicated at block 92. A Term Frequency-Inverse Document Frequency (TF-IDF) matrix is constructed, as indicated at block 94. In some cases, constructing the TF-IDF matrix may include information that is received from an access database 96. In some cases, a feature extraction tool may extract the relevant information from the database, as indicated at block 98. A door card vector is determined using the TF-IDF matrix, as indicated at block 100. Also, unused cards are identified using the TF-IDF matrix, as indicated at block 102. Unused zones are identified using the TF-IDF matrix, as indicated at block 104. A similarity score may be calculated based on the TF-IDF matrix using cosine similarity, as indicated at block 106. The similarity score may compare the access patterns of one authorized user to other authorized users to help determine whether an access right should be eliminated. For example, if two authorized users have similar access patterns, and one authorized user regularly uses a door that the other authorized user does not, a suggestion to retain access to door may be retained for both authorized users. An optimization suggestion module may provide suggested changes to user access rights, as indicated at block 108. In the example shown, a bot receives the suggestions, as indicated at block 110. The bot presents the suggestion to an operator input, and the operator accepts or does not accept the suggestion as indicated at block 112. When the operator accepts one or more of the suggestions, the bot 110 may implement the suggestion changes to the access rights.

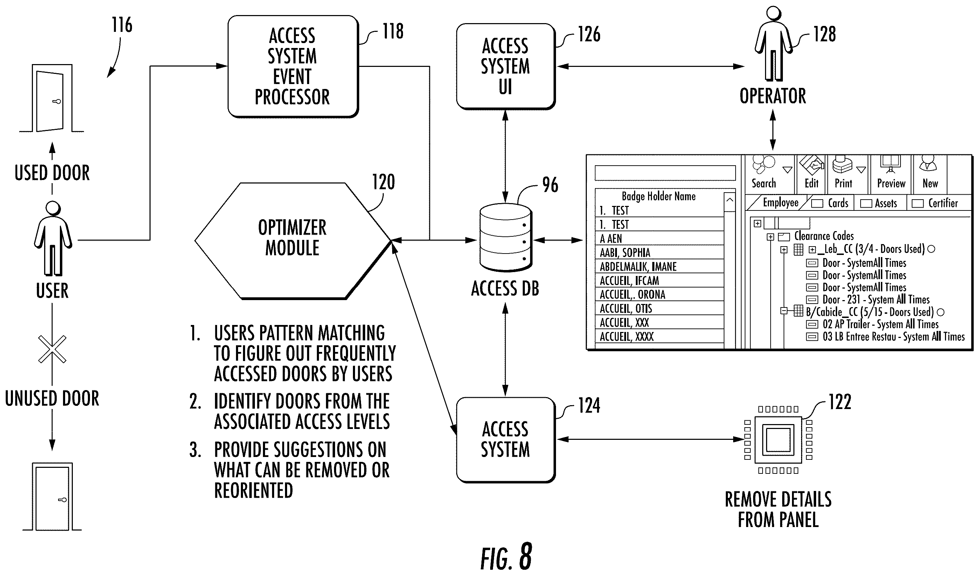

Figure 8 is a flow diagram showing an illustrative method 114. A user uses some doors, and does not use other doors, as generally indicated at 116. This information is provided to an event processor 118 and stored in an access database 96. An optimizer module 120 (which may represent the optimizer module 80) communicates with the access database 96 and an access control system 124. The optimizer module 120 uses pattern matching to determine frequently accessed doors for each authorized user. The optimizer module 120 provides suggestions as to what access rights of which authorized users should be changed, if any. An access system user interface 126 communicates with an operator 128. The operator 128 may be notified of the suggested changes to the access rights of certain authorized users, and the operator 128 may authorize the suggested changes to the access rights to certain authorized users via the access system user interface 126. These changes may then be automatically carried out by a bot of the optimization module and stored in the access database 96. The access control system 124 may store the changes to an access panel 122. The access panel 122 may receive a subsequent access request from an authorized user to a zone, door or other asset, and may make the determination of whether to grant access based on the updated access rights received from the access control system 124.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for reducing vulnerabilities of a security system of a facility by removing under-utilized access rights of an authorized user of the facility, comprising:
the authorized user of the facility having an assigned access credential that when presented to the security system during an access transaction allows access to the facility in accordance with a plurality of access rights assigned to the access credential, wherein each of the plurality of access rights define one or more conditions under which the security system of the facility will grant the authorized user access to the facility;
logging access transactions of the authorized user over time, wherein each of the logged access transactions record one or more the plurality of access rights and/or one or more of the defined conditions of one or more of the plurality of access rights that were used by the security system to grant access to the facility;
based at least in part on the logged access transactions of the authorized user, determining one or more of the plurality of access rights and/or one or more of the defined conditions of one or more of the plurality of access rights that are assigned to the access credential of the authorized user that were used at a utilization level that is below a utilization threshold; and
redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

2. The method of claim 1, wherein a first one of the one or more of the plurality of access rights includes an access right to access a particular door of the facility.

3. The method of either of claims 1 or 2, wherein one or more of the defined conditions of the first one of the one or more of the plurality of access rights includes a condition to only allow access to the particular door of the facility during a defined time period or defined time schedule.

4. The method of any of claims 1-3, wherein a first one of the one or more of the plurality of access rights includes an access right to access a particular floor of the facility.

5. The method of claim 4, wherein one or more of the defined conditions of the first one of the one or more of the plurality of access rights includes a condition to only allow access to the particular floor of the facility during a defined time period or defined time schedule.

6. The method of any of claims 1-5, wherein a first one of the one or more of the plurality of access rights includes an access right to access a particular zone of the facility.

7. The method of any of claims 1-6, comprising:
based at least in part on the logged access transactions of the authorized user, determining when the access credential of the authorized user were used at a utilization level that is below a access credential utilization threshold; and
revoking the access credential of the authorized user when the access credential of the authorized user were used at a utilization level that is below the access credential utilization threshold.

8. The method of any of claims 1-7, wherein redefining the plurality of access rights and/or one or more of the defined conditions of one or more of the plurality of access rights assigned to the access credential of the authorized user comprises:
removing the one or more of the plurality of access rights and/or one or more of the defined conditions of one or more of the plurality of access rights that have a utilization level that is below the utilization threshold.

9. The method of any of claims 1-7, wherein redefining the plurality of access rights and/or one or more of the defined conditions of one or more of the plurality of access rights assigned to the access credential of the authorized user comprises:
replacing one or more of the one or more of the plurality of access rights and/or one or more of the defined conditions of one or more of the plurality of access rights that have a utilization level that is below the utilization threshold with a new access right that includes the one or more of the plurality of access rights and/or one or more of the defined conditions of one or more of the plurality of access rights that have a utilization level that is above the utilization threshold but does not include the one or more of the plurality of access rights and/or one or more of the defined conditions of one or more of the plurality of access rights that have a utilization level that is below the utilization threshold.

10. The method of any of claims 1-9, comprising:
providing a suggestion to an operator of the security system via an operator user interface to redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold;
receiving an authorization from the operator via the operator user interface; and
in response to receiving the authorization from the operator via the operator user interface, redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

11. The method of any of claims 1-10, comprising automatically repeating from time to time:
based at least in part on the logged access transactions of the authorized user, determining one or more of the plurality of access rights and/or one or more of the defined conditions of one or more of the plurality of access rights that are assigned to the access credential of the authorized user that were used at a utilization level that is below a utilization threshold; and
redefining the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.

12. The method of claim 11, wherein automatically repeating from time to time comprises automatically repeating at a rate of once per month or less.

13. A system for reducing vulnerabilities of a security system of a facility by removing under-utilized access rights of an authorized user of the facility, the system comprising:
a memory for storing an assigned access credential and a plurality of access rights assigned to the access credential for the authorized user that when presented to the security system during an access transaction allows the authorized user access to the facility in accordance with the plurality of access rights assigned to the access credential, wherein each of the plurality of access rights define one or more conditions under which the security system of the facility will grant the authorized user access to the facility;
a controller operatively coupled to the memory and the security system, the controller configured to:
receive access transactions of the authorized user over time from the security system;
log the access transactions of the authorized user over time, wherein each of the logged access transactions includes one or more of the plurality of access rights and/or one or more of the defined conditions of one or more of the plurality of access rights that were used by the security system to grant access to the facility;
based at least in part on the logged access transactions of the authorized user, determine one or more of the plurality of access rights and/or one or more of the defined conditions of one or more of the plurality of access rights that are assigned to the access credential of the authorized user that were used at a utilization level that is below a utilization threshold;
redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold; and
write the redefined access rights to the memory.

14. The system of claim 13, wherein the controller, in redefining the plurality of access rights and/or one or more of the defined conditions of one or more of the plurality of access rights assigned to the access credential of the authorized user, is configured to:
remove the one or more of the plurality of access rights and/or one or more of the defined conditions of one or more of the plurality of access rights that have a utilization level that is below the utilization threshold.

15. A non-transitory computer readable medium storing instructions that when executed by one or more processors causes the one or more processors to:
store an assigned access credential and a plurality of access rights assigned to the access credential of an authorized user of a security system of a facility that when presented to the security system during an access transaction allows the authorized user access to the facility in accordance with the plurality of access rights assigned to the access credential, wherein each of the plurality of access rights define one or more conditions under which the security system of the facility will grant the authorized user access to the facility;
receive access transactions of the authorized user over time from the security system;
log the access transactions of the authorized user over time, wherein each of the logged access transactions includes one or more of the plurality of access rights and/or one or more of the defined conditions of one or more of the plurality of access rights that were used by the security system to grant access to the facility;
based at least in part on the logged access transactions of the authorized user, determine one or more of the plurality of access rights and/or one or more of the defined conditions of one or more of the plurality of access rights that are assigned to the access credential of the authorized user that were used at a utilization level that is below a utilization threshold; and
redefine the plurality of access rights and/or one or more of the defined conditions of one or more of the plurality of access rights assigned to the access credential of the authorized user to not include one or more of the plurality of access rights and/or one or more of the defined conditions of one or more of the plurality of access rights that have a utilization level that is below the utilization threshold.
